# FASCICULE DE BREVET EUROPEEN

(11) **EP 3 590 826 B1**
(45) Date de publication et mention de la délivrance du brevet: **19.08.2020**
(21) Numéro de dépôt: 19184567.6
(22) Date de dépôt: 05.07.2019
(51) Int. Cl.: B64C 7/00, G01D 11/24

(54) **STRUCTURE D'AÉRONEF COMPRENANT UN CAPTEUR AVEC UN SYSTÈME DE JONCTION AMÉLIORÉ ET AÉRONEF COMPRENANT LADITE STRUCTURE**
LUFTFAHRZEUGSTRUKTUR, DIE EINEN SENSOR MIT EINEM VERBESSERTEN VERBINDUNGSSYSTEM UMFASST, UND LUFTFAHRZEUG, DAS DIESE STRUKTUR UMFASST
AIRCRAFT STRUCTURE COMPRISING A SENSOR WITH AN IMPROVED JOINING SYSTEM AND AIRCRAFT COMPRISING SAID STRUCTURE

(30) Priorité: 06.07.2018 FR 1856235
(43) Date de publication de la demande: 08.01.2020
(73) Titulaire: AIRBUS OPERATIONS (S.A.S.), 31060 Toulouse (FR)
(72) Inventeur: SMET, Marie-Anne, 31060 Toulouse Cedex 9 (FR)
(74) Mandataire: Sarraméa, Claude

(56) Documents cités:
- EP-A1- 2 690 412
- DE-A1- 4 325 782
- DE-A1-102010 038 988
- DE-A1-102011 006 594
- DE-A1-102011 054 231
- DE-U1-202007 011 834

## Description

La présente demande se rapporte à une structure d'aéronef comprenant un capteur avec un système de jonction amélioré ainsi qu'à un aéronef comprenant ladite structure.

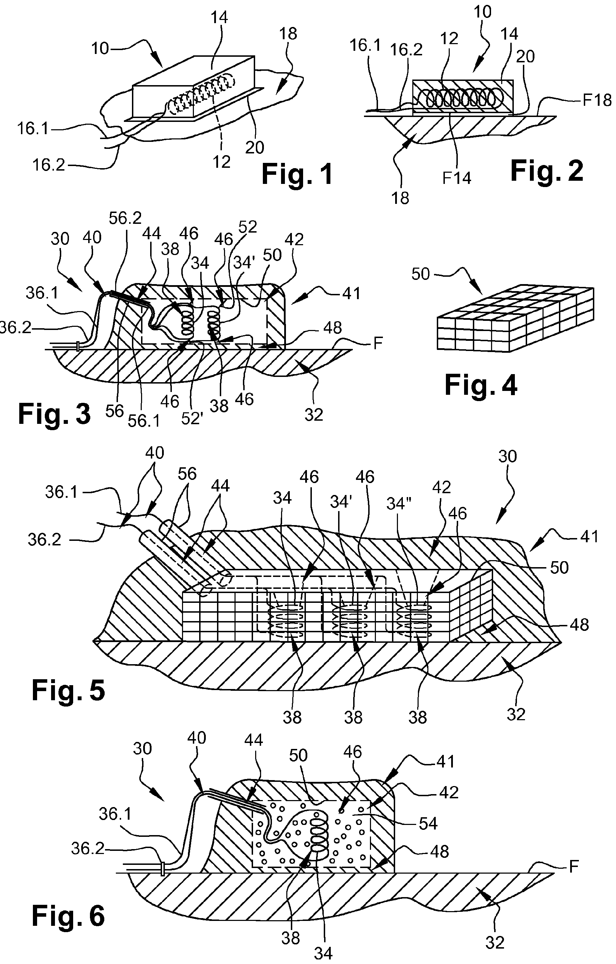

Selon un mode de réalisation visible sur les figures 1 et 2, un capteur 10 comprend une bobine 12 noyée dans une matrice rigide 14 ainsi que deux câbles 16.1, 16.2 reliés à la bobine 12 et sortant de la matrice rigide 14. Le capteur 10 est fixé sur une structure 18 d'un aéronef par un liant 20 intercalé entre une face F14 de la matrice rigide 14 et une surface F18 de la structure 18. Selon une configuration, les câbles 16.1, 16.2 peuvent être reliés à la structure 18 en sortie de la matrice rigide 14.

En fonctionnement, la structure 18 se déforme en raison de contraintes extérieures (température, vibration, humidité, chargement mécanique, radiation, ...). Ces déformations peuvent être relativement importantes et atteindre des valeurs de l'ordre de 5 mm par mètre.

La structure 18 et la matrice rigide 14 n'étant pas réalisées dans le même matériau, elles ont des comportements différents, en réponse aux contraintes extérieures, susceptibles d'engendrer des risques de dysfonctionnements du capteur 10, en raison par exemple d'une rupture au niveau du liant 20, de la matrice rigide 14 et/ou de la connexion des câbles 16.1, 16.2.

Les documents DE43 25 782 A1, DE20 2007 011834 U1, DE10 2011 054231 A1, EP2 690 410 A1, DE10 2011 006594A1 et DE10 2010 038988A1 décrivent des capteurs conformes à l'art antérieur.

### EXPOSE DE L'INVENTION :

La présente invention vise à remédier à tout ou partie des inconvénients de l'art antérieur.

A cet effet, l'invention a pour objet une structure d'aéronef présentant une surface sur laquelle est fixé un capteur comprenant au moins un transducteur, configuré pour convertir une caractéristique physique en au moins un signal, et au moins un élément conducteur configuré pour véhiculer ledit signal, ledit capteur étant relié à la structure par un système de jonction.

Selon l'invention, le système de jonction comprend au moins une enceinte dans laquelle est positionné ledit au moins un transducteur, au moins un passage configuré pour permettre à au moins un élément conducteur de traverser l'enceinte, au moins une liaison souple reliant chaque transducteur présent dans l'enceinte à ladite enceinte et au moins un liant assurant une jonction entre l'enceinte et la structure, le système de jonction étant configuré pour ne pas perturber un fonctionnement du transducteur.

Le fait de placer le ou les transducteur(s) dans une enceinte et de le ou les relier à ladite enceinte par au moins une liaison souple empêche la propagation des déformations de la structure en direction du ou des transducteur(s) ce qui limite les risques de dysfonctionnement du capteur.

Selon une autre caractéristique, l'enceinte comprend une cage ajourée qui présente une surface extérieure et le liant qui recouvre la surface extérieure de la cage ajourée.

Selon une configuration, la cage ajourée est une cage en treillis souple qui présente des mailles avec des dimensions limitant la pénétration du liant dans la cage en treillis.

Selon un premier mode de réalisation, la liaison souple comprend, pour chaque transducteur, au moins un fil reliant le transducteur à l'enceinte, configuré pour le maintenir selon une position donnée et limiter la propagation des déformations de l'enceinte vers le transducteur.

Selon un deuxième mode de réalisation, la liaison souple est un matériau de remplissage comblant l'intérieur de l'enceinte de manière à noyer chaque transducteur, ledit matériau de remplissage étant en matériau limitant la propagation des déformations de l'enceinte vers le ou les transducteur(s).

Selon une autre caractéristique, chaque passage est configuré pour limiter l'adhérence entre l'enceinte et chaque élément conducteur qui la traverse.

Selon une configuration, chaque passage comprend un fourreau présentant une première extrémité, qui débouche à l'intérieur de l'enceinte, et une deuxième extrémité, qui débouche à l'extérieur de l'enceinte, ledit fourreau étant configuré pour loger au moins un élément conducteur et lui permettre de coulisser par rapport à l'enceinte.

Selon une autre caractéristique, chaque élément conducteur présente une sur-longueur à l'intérieur de l'enceinte.

Selon un mode de réalisation, le liant est un mastic à polymérisation rapide.

L'invention a également pour objet un aéronef comprenant une structure selon l'une des caractéristiques précédentes.

### DESCRIPTION DETAILLEE :

D'autres caractéristiques et avantages ressortiront de la description de l'invention qui va suivre, description donnée à titre d'exemple uniquement, en regard des dessins annexés parmi lesquels :
   - la figure 1 est une vue en perspective d'un capteur fixé sur une structure qui illustre un mode de réalisation de l'art antérieur,
   - la figure 2 est une coupe du capteur et de la structure visibles sur la figure 1,
   - la figure 3 est une coupe d'un capteur fixé sur une structure qui illustre un premier mode de réalisation de l'invention,
   - la figure 4 est une vue en perspective d'une cage en treillis du capteur visible sur la figure 3,
   - la figure 5 est une vue en perspective (avec un arrachement partiel du liant) d'un capteur fixé sur une structure qui illustre un mode de réalisation de l'invention, et
   - la figure 6 est une coupe d'un capteur fixé sur une structure qui illustre un deuxième mode de réalisation de l'invention.

Sur les figures 3, 5 et 6, on a représenté un capteur 30 rapporté sur une surface F d'une structure 32 d'un aéronef.

Selon un mode de réalisation, le capteur 30 comprend au moins une bobine 34 et deux câbles électriques 36.1, 36.2, sortant du capteur 30, configurés pour acheminer un signal électrique entre la bobine 34 et un dispositif d'analyse du signal (non représenté). Selon une configuration visible sur la figure 6, le capteur 30 comprend une unique bobine 34 qui présente deux extrémités reliées aux câbles électriques 36.1, 36.2. Selon d'autres configurations visibles sur les figures 3 et 5, le capteur 30 comprend plusieurs bobines 34, 34', 34", chacune d'elles présentant deux extrémités reliées à un couple de câbles électriques 36.1, 36.2.

Quel que soit le mode de réalisation, le capteur 30 comprend au moins un transducteur 38, comme par exemple au moins une bobine 34, configuré pour convertir une caractéristique physique en au moins un signal, et au moins un élément conducteur 40, comme par exemple un câble électrique 36.1, 36.2, configuré pour véhiculer à l'extérieur du capteur 30 ledit signal. Cet élément conducteur 40 peut également être utilisé pour alimenter le ou les transducteur(s) 38 en énergie électrique.

Le capteur 30 est relié à la structure 32 par un système de jonction 41 qui comprend au moins une enceinte 42 dans laquelle est positionné au moins un transducteur 38, au moins un passage 44 configuré pour permettre à au moins un élément conducteur 40 de traverser l'enceinte 42, au moins une liaison souple 46 reliant chaque transducteur 38 présent dans l'enceinte 42 à ladite enceinte 42 et au moins un liant 48 assurant la jonction entre l'enceinte 42 et la structure 32. Le liant 48 est configuré pour occuper un état pâteux afin de permettre son application et un état solide après durcissement. Le système de jonction est configuré pour ne pas perturber le fonctionnement du ou des transducteur(s) 38. A titre d'exemple, chaque enceinte 42, chaque passage 44, chaque liaison souple 46 et chaque liant 48 sont réalisés en un matériau non conducteur électrique lorsque le transducteur 38 se présente sous la forme d'une bobine 34.

L'enceinte 42 est un élément creux.

Selon une première configuration, l'enceinte 42 est un élément disjoint du liant 48 et assure l'intégrité physique du capteur 30. A titre d'exemple, l'enceinte 42 peut se présenter sous la forme d'une cage en treillis.

Selon une autre configuration visible sur les figures 3 à 6, l'enceinte 42 comprend une cage 50 ajourée qui présente une surface extérieure et le liant 48 qui recouvre la surface extérieure de la cage 50 ajourée. Selon cette configuration, le liant 48 assure les fonctions d'étanchéité et d'intégrité physique du capteur 30, la cage 50 ajourée permettant de former une cavité à l'intérieur du liant 48.

Selon un mode de réalisation visible sur la figure 4, la cage 50 ajourée est une cage en treillis, visible sur la figure 4, qui présente des mailles dont les dimensions limitent la pénétration du liant 48 dans la cage en treillis. Cette dernière est réalisée à partir de fil non conducteur électrique. Cette cage en treillis est souple pour lui permettre de s'adapter à la surface F de la structure 32 qui peut ne pas être plane. Sur l'exemple visible sur la figure 4, la cage 50 ajourée a une forme approximativement parallélépipédique. Bien entendu, l'invention n'est pas limitée à cette géométrie.

Selon un mode de réalisation, le liant 48 est un mastic à polymérisation rapide, de type PR, utilisé dans l'industrie aéronautique. Il est configuré pour assurer la liaison entre l'enceinte 42 et la structure 32.

Lorsque l'enceinte 42 se présente sous la forme d'une cage 50 ajourée, le liant 48 peut être intercalé seulement entre la cage 50 ajourée et la structure 32. Dans ce cas, la cage 50 ajourée assure l'intégrité physique du capteur et le liant 48 la fonction de liaison entre le capteur 30 et la structure 32. Cet agencement peut convenir pour des capteurs n'ayant pas besoin d'être étanches. En variante, le liant 48 peut totalement recouvrir la cage 50 ajourée. Dans ce cas, le liant 48 assure les fonctions de liaison et d'étanchéité.

La liaison souple 46 est configurée pour maintenir chaque transducteur 38 dans l'enceinte 42 selon une position donnée, tout en limitant la propagation des déformations de l'enceinte 42 vers le ou les transducteur(s) 38.

Selon un premier mode de réalisation illustré par la figure 3, pour chaque transducteur 38, la liaison souple 46 comprend au moins un fil 52 reliant le transducteur 38 à l'enceinte 42, notamment à la cage 50 ajourée. Dans le cas d'une bobine 34, 34' positionnée dans une cage 50 ajourée parallélépipédique, la liaison souple 46 comprend, pour chaque bobine 34, 34', un premier fil 52 reliant une première extrémité de la bobine 34, 34' à une première face de la cage 50 ajourée et un deuxième fil 52' reliant une deuxième extrémité de la bobine 34, 34' à une deuxième face de la cage 50 ajourée, opposée à la première face.

Selon un deuxième mode de réalisation illustré par la figure 6, la liaison souple 46 est un matériau de remplissage 54 comblant l'intérieur de l'enceinte 42 de manière à noyer chaque transducteur 38. Ce matériau de remplissage 54 est en matériau limitant la propagation des déformations entre l'enceinte 42 et le ou les transducteur(s) 38. A titre d'exemple, le matériau de remplissage 54 est une résine époxy souple, une mousse de polyuréthane, du caoutchouc, .... Le fait de prévoir une enceinte 42 et un matériau de remplissage 54 permet de dissocier les fonctions, l'enceinte 42 étant réalisée en un matériau adapté pour assurer l'intégrité physique du ou des transducteur(s) 38, le matériau de remplissage 54 étant adapté pour limiter la propagation des déformations entre l'enceinte 42 et le ou les transducteur(s) 38.

Chaque passage 44 est configuré pour permettre un coulissement de chaque élément conducteur 40 qui le traverse. Cette configuration permet de limiter les risques d'endommagement de chaque élément conducteur 40 ou de sa liaison avec le transducteur 38.

Selon un mode réalisation, chaque passage 44 comprend un fourreau 56 présentant une première extrémité 56.1, qui débouche à l'intérieur de l'enceinte 42, et une deuxième extrémité 56.2, qui débouche à l'extérieur de l'enceinte 42, et qui est configuré pour loger au moins un élément conducteur 40 et lui permettre de coulisser par rapport à l'enceinte 42, de l'intérieur vers l'extérieur ou de l'extérieur vers l'intérieur.

Selon une configuration, le capteur 30 comprend autant de fourreaux 56 que d'éléments conducteurs 40 traversant l'enceinte 42. En variante, un fourreau 56 peut contenir plusieurs éléments conducteurs 40. Dans le cas d'une enceinte 42 sous la forme d'une cage 50 ajourée, chaque fourreau 56 est solidarisé à la cage 50 ajourée.

De façon particulière, chaque fourreau 56 est rempli d'un matériau de remplissage souple permettant d'assurer l'étanchéité de l'enceinte 42. Ce matériau de remplissage souple peut être similaire ou non similaire au matériau de remplissage 54. A titre d'exemple, ce matériau de remplissage souple est une résine époxy souple, une mousse de polyuréthane, du caoutchouc, etc.

Bien entendu, l'invention n'est pas limitée à ce mode de réalisation pour le ou les passage(s) 44. Ainsi, chaque élément conducteur 40 pourrait être enduit d'un revêtement antiadhérent avec le liant 48 permettant à chaque élément conducteur 40 de coulisser par rapport au liant 48.

Selon un agencement, chaque élément conducteur 40 présente une sur-longueur à l'intérieur de l'enceinte 42. Cet agencement permet de limiter les risques d'endommagement de chaque élément conducteur 40 ou de sa liaison avec le transducteur 38.

Selon un mode opératoire, le (ou les) transducteur(s) 38 est (ou sont) positionné(s) dans une cage en treillis souple. Chaque transducteur 38 est relié à la cage en treillis souple par une liaison souple 46 afin de le maintenir selon une position donnée dans ladite cage en treillis souple. Chaque élément conducteur 40 est inséré dans un fourreau 56 relié à la cage en treillis souple. Ainsi, chaque capteur 30 comprend le ou les transducteur(s) 38, le ou les élément(s) conducteur(s) 40, la cage en treillis souple, la ou les liaison(s) souple(s) 46 et le ou les fourreau(x) 56.

Lorsque le capteur 30 est apposé sur la structure 32, la cage en treillis souple est apposée contre la surface F de la structure 32 de manière à la conformer en fonction de la géométrie de la surface F. En suivant, le liant 48 est déposé sur la surface F de la structure 32 puis la cage en treillis souple est placée sur le liant 48. Enfin, la cage en treillis souple est recouverte par le liant 48. Après durcissement du liant 48, le capteur 30 est relié à la structure 32.

Le fait de placer le ou les transducteur(s) dans une enceinte 42 et de le ou les relier à ladite enceinte 42 par au moins une liaison souple 46 empêche la propagation des déformations de la structure 32 en direction du ou des transducteur(s) 38, ce qui limite les risques de dysfonctionnement du capteur.

Le fait de prévoir une cage 50 ajourée recouverte du liant 48 permet de former une enceinte étanche simple, le liant 48 assurant la fonction de liaison entre l'enceinte 42 et la structure 32 ainsi que la fonction d'étanchéité de l'enceinte 42, ce qui limite également les risques de dysfonctionnement du capteur 30.

Le fait de prévoir une cage 50 ajourée sous la forme d'une cage en treillis souple permet, lors de la mise en place du capteur 30, de la conformer en fonction de la géométrie de la surface F de la structure.

## Revendications

1. Structure d'aéronef présentant une surface (F) sur laquelle est fixé un capteur (30) comprenant au moins un transducteur (38), configuré pour convertir une caractéristique physique en au moins un signal, et au moins un élément conducteur (40) configuré pour véhiculer ledit signal, ledit capteur (30) étant relié à la structure (32) par un système de jonction (41), le système de jonction (41) comprenant au moins une enceinte (42) dans laquelle est positionné ledit au moins un transducteur (38), au moins un passage (44) configuré pour permettre à au moins un élément conducteur (40) de traverser l'enceinte (42), au moins une liaison souple (46) reliant chaque transducteur (38) présent dans l'enceinte (42) à ladite enceinte (42) et au moins un liant (48) assurant une jonction entre l'enceinte (42) et la structure (32), l'enceinte (42) comportant une cage (50) ajourée en treillis souple qui présente une surface extérieure et des mailles avec des dimensions limitant la pénétration du liant (48) dans la cage (50) ajourée en treillis, le liant (48) recouvrant la surface extérieure de la cage (50) ajourée en treillis.

2. Structure d'aéronef selon la revendication 1, **caractérisée en ce que** le transducteur (38) est une bobine (34) et le système de jonction (41) est réalisé en un matériau non conducteur électrique.

3. Structure d'aéronef selon l'une des revendications précédentes **caractérisée en ce que** la liaison souple (46) comprend, pour chaque transducteur (38), au moins un fil (52) reliant le transducteur (38) à l'enceinte (42), configuré pour le maintenir selon une position donnée et limiter la propagation des déformations de l'enceinte (42) vers le transducteur (38).

4. Structure d'aéronef selon l'une des revendications 1 à 2, **caractérisée en ce que** la liaison souple (46) est un matériau de remplissage (54) comblant l'intérieur de l'enceinte (42) de manière à noyer chaque transducteur (38), ledit matériau de remplissage (54) étant en matériau limitant la propagation des déformations de l'enceinte (42) vers le ou les transducteur(s) (38).

5. Structure d'aéronef selon l'une des revendications précédentes, **caractérisée en ce que** chaque passage (44) est configuré pour permettre un coulissement de chaque élément conducteur (40) qui le traverse.

6. Structure d'aéronef selon la revendication précédente, **caractérisée en ce que** chaque passage (44) comprend un fourreau (56) présentant une première extrémité (56.1), qui débouche à l'intérieur de l'enceinte (42), et une deuxième extrémité (56.2), qui débouche à l'extérieur de l'enceinte (42), ledit fourreau (56) étant configuré pour loger au moins un élément conducteur (40) et lui permettre de coulisser par rapport à l'enceinte (42).

7. Structure d'aéronef selon l'une des revendications précédentes, **caractérisée en ce que** chaque élément conducteur (40) présente une sur-longueur à l'intérieur de l'enceinte (42).

8. Structure d'aéronef selon l'une des revendications précédentes, **caractérisée en ce que** le liant (48) est un mastic à polymérisation rapide.

9. Aéronef comprenant une structure selon l'une des revendications précédentes.

## Patentansprüche

1. Luftfahrzeugstruktur, die eine Fläche (F) aufweist, auf der ein Sensor (30) befestigt ist, der mindestens einen Wandler (38), der konfiguriert ist, ein physikalisches Merkmal in mindestens ein Signal umzuwandeln, und mindestens ein leitendes Element (40) enthält, das konfiguriert ist, das Signal zu transportieren, wobei der Sensor (30) durch ein Verbindungssystem (41) mit der Struktur (32) verbunden ist, wobei das Verbindungssystem (41) mindestens einen Raum (42), in dem der mindestens eine Wandler (38) positioniert ist, mindestens einen Durchgang (44), der konfiguriert ist, mindestens einem leitenden Element (40) zu erlauben, den Raum (42) zu durchqueren, mindestens eine elastische Verbindung (46), die jeden im Raum (42) vorhandenen Wandler (38) mit dem Raum (42) verbindet, und mindestens ein Bindemittel (48) enthält, das eine Verbindung zwischen dem Raum (42) und der Struktur (32) gewährleistet, wobei der Raum (42) einen elastischen Lochgitterkäfig (50) aufweist, der eine Außenfläche und Maschen mit Abmessungen aufweist, die das Eindringen des Bindemittels (48) in den Lochgitterkäfig (50) begrenzen, wobei das Bindemittel (48) die Außenfläche des Lochgitterkäfigs (50) bedeckt.

2. Luftfahrzeugstruktur nach Anspruch 1, **dadurch gekennzeichnet, dass** der Wandler (38) eine Spule (34) ist, und das Verbindungssystem (41) aus einem nicht elektrisch leitenden Material hergestellt ist.

3. Luftfahrzeugstruktur nach einem der vorhergehenden Ansprüche, **dadurch gekennzeichnet, dass** die elastische Verbindung (46) für jeden Wandler (38) mindestens einen den Wandler (38) mit dem Raum (42) verbindenden Draht (52) enthält, der konfiguriert ist, ihn gemäß einer gegebenen Stellung zu halten und die Ausbreitung der Verformungen des Raums (42) zum Wandler (38) zu begrenzen.

4. Luftfahrzeugstruktur nach einem der Ansprüche 1 bis 2, **dadurch gekennzeichnet, dass** die elastische Verbindung (46) ein Füllmaterial (54) ist, das das Innere des Raums (42) so füllt, dass es jeden Wandler (38) versenkt, wobei das Füllmaterial (54) aus einem Material ist, das die Ausbreitung der Verformungen des Raums (42) zu dem oder den Wandler(n) (38) begrenzt.

5. Luftfahrzeugstruktur nach einem der vorhergehenden Ansprüche, **dadurch gekennzeichnet, dass** jeder Durchgang (44) konfiguriert ist, ein Gleiten jedes ihn durchquerenden leitenden Elements (40) zu erlauben.

6. Luftfahrzeugstruktur nach dem vorhergehenden Anspruch, **dadurch gekennzeichnet, dass** jeder Durchgang (44) ein Mantelrohr (56) enthält, das ein erstes Ende (56.1), das im Inneren des Raums (42) mündet, und ein zweites Ende (56.2) aufweist, das außerhalb des Raums (42) mündet, wobei das Mantelrohr (56) konfiguriert ist, mindestens ein leitendes Element (40) aufzunehmen und ihm zu erlauben, bezüglich des Raums (42) zu gleiten.

7. Luftfahrzeugstruktur nach einem der vorhergehenden Ansprüche, **dadurch gekennzeichnet, dass** jedes leitende Element (40) eine Überlänge im Inneren des Raums (42) aufweist.

8. Luftfahrzeugstruktur nach einem der vorhergehenden Ansprüche, **dadurch gekennzeichnet, dass** das Bindemittel ein Kitt (48) mit schneller Polymerisierung ist.

9. Luftfahrzeug, das eine Struktur nach einem der vorhergehenden Ansprüche enthält.

## Claims

1. Aircraft structure having a surface (F) on which is fixed a sensor (30) comprising at least one transducer (38), configured to convert a physical characteristic into at least one signal, and at least one conductive element (40) configured to convey said signal, said sensor (30) being linked to the structure (32) by a joining system (41), the joining system (41) comprising at least one chamber (42) in which said at least one transducer (38) is positioned, at least one passage (42) configured to allow at least one conductive element (40) to pass through the chamber (42), at least one flexible link (46) linking each transducer (38) present in the chamber (42) to said chamber (42) and at least one binder (48) ensuring a join between the chamber (42) and the structure (32), the chamber (42) comprising a flexible lattice openwork cage (50) which has an outer surface and meshes with dimensions limiting the penetration of the binder (48) into the lattice openwork cage (50), the binder (48) covering the outer surface of the lattice openwork cage (50).

2. Aircraft structure according to Claim 1, **characterized in that** the transducer (38) is a coil (34) and the joining system (41) is produced in an electrically non-conductive material.

3. Aircraft structure according to one of the preceding claims, **characterized in that** the flexible link (46) comprises, for each transducer (38), at least one wire (52) linking the transducer (38) to the chamber (42), configured to hold it according to a given position and limit the propagation of the deformations of the chamber (42) towards the transducer (38) .

4. Aircraft structure according to one of Claims 1 and 2, **characterized in that** the flexible link (46) is a filling material (54) filling the interior of the chamber (42) so as to embed each transducer (38), said filling material (54) being made of a material limiting the propagation of the deformations of the chamber (42) towards the transducer or transducers (38) .

5. Aircraft structure according to one of the preceding claims, **characterized in that** each passage (44) is configured to allow each conductive element (40) which passes through it to slide.

6. Aircraft structure according to the preceding claim, **characterized in that** each passage (44) comprises a sleeve (56) having a first end (56.1), which emerges inside the chamber (42), and a second end (56.2), which emerges outside of the chamber (42), said sleeve (56) being configured to house at least one conductive element (40) and allow it to slide relative to the chamber (42).

7. Aircraft structure according to one of the preceding claims, **characterized in that** each conductive element (40) has an excess length inside the chamber (42) .

8. Aircraft structure according to one of the preceding claims, **characterized in that** the binder (48) is a rapid polymerization mastic.

9. Aircraft comprising a structure according to one of the preceding claims.
